# FASCICULE DE BREVET EUROPEEN

(11) **EP 2 406 187 B1**
(45) Date de publication et mention de la délivrance du brevet: **04.05.2016**
(21) Numéro de dépôt: 10711819.2
(22) Date de dépôt: 04.03.2010
(51) Int. Cl.: C02F 9/00, C02F 1/40, C02F 1/461, C02F 3/30, C02F 1/463, C02F 3/06, C02F 1/467, C02F 3/00, C02F 101/10, C02F 101/20

(54) **PROCEDE D'ELECTROLYSE ET PROCEDE ET INSTALLATION DE PRÉ -TRAITEMENT D'EAU BRUTE**
Anlage und Verfahren zur Vorbehandlung von Rohwasser
Installation and method for the pre-processing of raw water

(30) Priorité: 09.03.2009 EP 09356017
(43) Date de publication de la demande: 18.01.2012
(73) Titulaire: F-Tec Systems S.A., 1870 Monthey (CH)
(72) Inventeur: FRESNEL, Jean-Marie, F-01710 Thoiry (FR)
(74) Mandataire: Stona, Daniel
(86) Numéro de dépôt international: PCT/CH2010/000056
(87) Numéro de publication internationale: WO 2010/102418

(56) Documents cités:
- EP-A1- 1 995 221
- EP-A1- 1 995 221
- WO-A1-94/00388
- WO-A1-2004/056711
- WO-A1-2004/056711
- DE-A1- 10 040 417
- DE-A1- 10 040 417
- DE-U1-202007 010 704
- DE-U1-202008 011 162
- DE-U1-202008 011 162
- FR-A1- 2 134 035
- US-A1- 2003 062 321
- US-A1- 2006 000 784
- US-A1- 2006 000 784
- Guohua Chen: "Electrochemical technologies in wastewater treatment", Separation and Purification Technology, vol. 38, no. 1 15 juillet 2004 (2004-07-15), pages 11-41, XP002596623, DOI: 10.1016/j.seppur.2003.10.006 Extrait de l'Internet: URL:http://www.sciencedirect.com [extrait le 2010-08-13]
- Kaan Yetilmezsoy et al: "Decolorization and COD reduction of UASB pretreated poultry manure wastewater by electrocoagulation process: A post-treatment study", Journal of Hazardous Materials, vol. 162, no. 1 15 février 2009 (2009-02-15), pages 120-132, XP002614192, DOI: 10.1016/j.jhazmat.2008.05.015 Extrait de l'Internet: URL:http://www.sciencedirect.com/ [extrait le 2010-12-14]
- KHOUFI ET AL: "Detoxification of olive mill wastewater by electrocoagulation and sedimentation processes", JOURNAL OF HAZARDOUS MATERIALS, ELSEVIER, AMSTERDAM, NL, vol. 142, no. 1-2, 19 mars 2007 (2007-03-19), pages 58-67, XP005933639, ISSN: 0304-3894, DOI: DOI:10.1016/J.JHAZMAT.2006.07.053
- GUOHUA CHEN ED - QIANG ZHIMIN ET AL: "Electrochemical technologies in wastewater treatment", SEPARATION AND PURIFICATION TECHNOLOGY, ELSEVIER SCIENCE, AMSTERDAM, NL , vol. 38, no. 1 15 July 2004 (2004-07-15), pages 11-41, XP002596623, ISSN: 1383-5866, DOI: 10.1016/J.SEPPUR.2003.10.006 Retrieved from the Internet: URL:http://www.sciencedirect.com [retrieved on 2010-08-13]
- KAAN YETILMEZSOY ET AL: "Decolorization and COD reduction of UASB pretreated poultry manure wastewater by electrocoagulation process: A post-treatment study", JOURNAL OF HAZARDOUS MATERIALS, ELSEVIER, AMSTERDAM, NL, vol. 162, no. 1, 15 February 2009 (2009-02-15), pages 120-132, XP002614192, ISSN: 0304-3894, DOI: 10.1016/J.JHAZMAT.2008.05.015 [retrieved on 2010-12-14]
- KHOUFI ET AL: "Detoxification of olive mill wastewater by electrocoagulation and sedimentation processes", JOURNAL OF HAZARDOUS MATERIALS, ELSEVIER, AMSTERDAM, NL, vol. 142, no. 1-2, 19 March 2007 (2007-03-19), pages 58-67, XP005933639, ISSN: 0304-3894, DOI: 10.1016/J.JHAZMAT.2006.07.053

## Description

L'invention concerne un procédé d'électrolyse ainsi qu'un procédé et une installation de pré-traitement d'eau brute destinés à produire une eau qui pourra ensuite être facilement traitée pour donner une eau potable ou une eau dite « technique », c'est-à-dire impropre à la consommation mais pouvant trouver des utilisations ménagères, agricoles et industrielles, telles que le nettoyage, le lavage, la lessive, la chasse d'eau, l'arrosage d'un jardin ou l'irrigation.

### Arrière-plan de l'invention

Dans la demande de brevet européen n° EP 0 595 178 est décrit un dispositif de traitement électrolytique d'eaux usées à électrodes verticales. Il est indiqué dans ce document que l'électrolyse faisant appel à un courant continu, une anode de fer soluble et à une suspension ou poussière de particules de « coke » (cf. page 3, colonne 4, lignes 32 et 34) en vue de produire une galvano-coagulation.

Le brevet américain n° US 4 014 766 concerne un procédé de traitement d'eaux brutes au moyen d'un dispositif à cathode verticale et anode contenant des copeaux de fer (colonne 3, ligne 5), de façon à provoquer une floculation d'hydroxyde de fer. Le floc est ensuite oxydé.

Dans la demande de brevet français n° FR 2 459 067 est décrite une installation d'électro-épuration des eaux dans laquelle est produite une électrocoagulation au moyen d'électrodes constituées de panier contenant de la ferraille (page 5, lignes 10,11).

Le brevet américain publié sous le n° US 2005/0167285 traite de l'élimination des arséniates contenus dans de l'eau potable. Il mentionne la formation d'un hydroxyde métallique par dissolution anodique (page 3, paragraphe [0046]) d'une anode qui peut être en acier doux ou inoxydable (paragraphe [0048]).

Le document JP 51150866 divulgue un procédé d'élimination d'eau usée contenant des ions Cr⁶⁺, dans lequel ces ions sont électrolytiquement réduits en ions Cr³⁺ dans un dispositif à cathode verticale entourant des particules contenues dans un récipient.

La demande de brevet américain n° US 2006/0000784 décrit un procédé de traitement d'eaux usées en plusieurs étapes. Une première étape peut consister à obtenir un effluent intermédiaire par exemple par coagulation ou floculation (page 2, colonne de gauche, ligne 2). Dans une deuxième étape, on peut traiter l'effluent intermédiaire en utilisant (paragraphe [0021]) :
- soit un traitement électrochimique spontané, dans lequel des déchets de fer sacrificiel activés, de préférence par des ions ferriques, sont utilisés ; ces ions ferriques peuvent être formés par oxydation de fer métallique ou d'ions ferreux au moyen, notamment, de chlore actif ;
- soit un traitement électrochimique se produisant de façon non spontanée, en appliquant une tension électrique à un métal sacrificiel ou à des ions ferreux.

Dans le brevet américain n° US 5 578 200 sont cités les coagulants habituellement utilisés. Il s'agit en général de coagulants minéraux tels que le sulfate d'aluminium, le chlorure d'aluminium et le chlorure ferrique. La demande de brevet américain précitée n° US 2006/0000784 mentionne également (paragraphe [0015]) l'utilisation de métaux sacrificiels qui peuvent être, outre le fer et l'aluminium, le nickel, le cobalt, le zinc, le cuivre et leurs combinaisons.

Il y a plus de dix ans déjà, l'inventeur de la présente demande de brevet a mis au point le procédé de pré-traitement d'eaux brutes faisant l'objet de la demande de brevet français publiée sous le numéro FR 2 740 129.

Ce procédé comporte une étape de chloration de choc au moyen d'hypochlorite puis une étape de désinfection poussée par électrolyse de particules de fer qui peuvent être contenues dans des paniers de titane ou de zirconium recouverts d'un catalyseur et agités mécaniquement ou au moyen d'ultrasons.

Au cours de cette désinfection poussée, l'eau à traiter est électrolysée au moyen d'un courant alternatif, en vue de réduire le chlore actif résiduel. L'hypochlorite résiduel restant dans l'eau à traiter et dont la concentration est très faible, de l'ordre de 1 à 5 ppm, est également électrolysé en même temps.

L'inventeur a poursuivi ses recherches en vue d'améliorer son procédé et d'intégrer les nouvelles normes en matière d'eau potable, en particulier la norme européenne n° DE 98/83/CE, ainsi que les dernières recommandations de l'Organisation Mondiale de la Santé (OMS) dans ce domaine.

Il est ainsi parvenu à mettre au point de nouveaux procédés, dispositifs et installations capable de pré-traiter des eaux d'une qualité encore plus dégradée que précédemment, car plus chargées en boues, sels, nitrites, composés organiques et/ou métaux lourds.

### Exposé sommaire de l'invention

L'invention est basée sur la mise au point d'un nouveau coagulant qui est obtenu par électrolyse d'une solution aqueuse à concentration élevée en hypochlorite de sodium concentrée, en présence de fer.

La nature exacte du coagulant obtenu lors de cette électrolyse n'est pas connue à ce jour (des études sont en cours pour la déterminer), il semblerait qu'il soit constitué d'une suspension dense contenant des ions ferriques et de fines particules. Quoi qu'il en soit, ce coagulant s'est montré particulièrement actif.

L'invention a donc pour objet principal un procédé d'électrolyse selon le point 1 suivant :
1.- Procédé d'électrolyse d'une solution aqueuse dans lequel :
   - on introduit des particules de fer dans un récipient métallique contenu dans une cuve munie d'une électrode ne touchant pas ce récipient métallique ;
   - on introduit dans ladite cuve une solution aqueuse contenant de l'hypochlorite de sodium, de façon à ce qu'elle recouvre au moins partiellement les particules de fer et soit en contact avec l'électrode ;
   - on alimente en courant le récipient métallique et l'électrode ;
   - on extrait de la cuve du produit de l'électrolyse ;
   caractérisé en ce que
   - le courant est continu ;
   - le récipient métallique contenant des particules de fer est l'anode et l'électrode est la cathode ;
   - la concentration en hypochlorite de sodium de la solution aqueuse est d'au moins 1 g/l (1000 ppm).

Des caractéristiques avantageuses du procédé d'électrolyse du point 1 précité sont indiquées dans les points 2 à 4 suivantes :
2.- Procédé d'électrolyse selon le point 1, dans lequel la concentration de la solution aqueuse en hypochlorite de sodium est supérieure à 4 g/l et est en particulier d'environ 6,5 g /1.
3.- Procédé d'électrolyse selon le point 1 ou 2, dans lequel la solution aqueuse contient en outre du chlorure de sodium.
4.- Procédé d'électrolyse selon le point 3, dans lequel la concentration en chlorure de sodium est d'au moins 10 g/l et de préférence d'environ 15 g/l.

Le produit obtenu par ce procédé d'électrolyse est donc le contenu de la cuve. Après extraction de la cuve, il peut servir de coagulant dans un procédé de traitement d'eau brute.

Ainsi, l'invention concerne également un procédé de pré-traitement d'eau brute selon le point 5 suivant :
5.- Procédé de pré-traitement d'une eau brute, dans lequel on utilise comme coagulant du produit d'électrolyse obtenu par la mise en oeuvre du procédé selon l'un des points 1 à 4.

Des caractéristiques avantageuses du procédé de pré-traitement d'eau brute du point 5 précité sont indiquées dans les points 6 à 9 suivants :
6. Procédé de pré-traitement d'une eau brute selon le point 5, comprenant :
   - une étape d'introduction du coagulant dans l'eau brute à pré-traiter ; puis
   - une étape de filtration biologique aérobie puis anaérobie.
7.- Procédé de pré-traitement d'une eau brute selon le point 6, comprenant en outre :
   - une étape d'électrolyse de l'eau provenant de l'étape de filtration biologique aérobie puis anaérobie.
8.- Procédé de pré-traitement d'une eau brute selon le point 7, comprenant en outre :
   - une étape d'introduction d'hypochlorite de sodium dans l'eau provenant de l'étape de filtration biologique aérobie puis anaérobie, avant l'étape d'électrolyse.
9.- Procédé de pré-traitement d'une eau brute selon l'un des points 5 à 8, comprenant en outre :
   - une étape de production d'une solution aqueuse d'hypochlorite de sodium.

L'invention a également pour objet une installation de pré-traitement d'eau brute, comprenant un dispositif d'électrolyse apte à mettre en oeuvre le procédé d'électrolyse selon l'invention et dont les caractéristiques essentielles sont déclinées au point 10 suivant :
10.- Installation de pré-traitement d'eau brute, comprenant :
   - un dispositif d'électrolyse comprenant une cuve contenant un récipient métallique et une électrode ne touchant pas ce récipient métallique ;
   - la sortie de ce dispositif d'électrolyse étant située au dessus d'un tranquillisateur ou reliée à la conduite d'arrivée de l'eau brute à traiter, en amont d'un filtre biologique comportant un lit de filtration aérobie suivi d'un lit de filtration anaérobie.

Des caractéristiques avantageuses du procédé de l'installation de pré-traitement d'eau brute du point 10 précité figurent dans les points 11 à 18 suivants :
11.- Installation selon le point 10, dans laquelle la cathode est disposée horizontalement au-dessus ou à l'intérieur du récipient métallique, dans sa partie supérieure.
12.- Installation selon le point 10 ou 11, dans laquelle la cathode se présente sous la forme d'une grille.
13.- Installation selon l'un des points 10 à 12, comprenant en outre des moyens d'agitation du récipient métallique.
14.- Installation selon l'une des points 10 à 13, comprenant en outre
   - un deuxième dispositif d'électrolyse comprenant une cuve contenant un deuxième récipient métallique et une deuxième électrode ;
   - l'entrée de ce deuxième dispositif d'électrolyse étant reliée à la sortie du filtre biologique.
15.- Installation selon le point 14, dans laquelle la deuxième électrode est disposée horizontalement au-dessus ou à l'intérieur du deuxième récipient métallique, dans sa partie supérieure.
16.- Installation selon le point 14 ou 15, dans laquelle le deuxième dispositif d'électrolyse est muni d'un électro-aimant ou boucle magnétique entourant le deuxième récipient métallique.
17. - Installation selon l'un des points 10 à 16, comprenant en outre un dispositif de production d'une solution aqueuse d'hypochlorite de sodium dont la sortie est reliée à la conduite d'entrée du premier dispositif d'électrolyse.
18.- Installation selon le point 17, lorsque celui-ci se réfère au point 14, 15 ou 16, dans laquelle une conduite relie le dispositif de production d'une solution aqueuse d'hypochlorite de sodium à l'entrée du deuxième dispositif d'électrolyse.

L'installation de pré-traitement d'eau brute selon les points 17 et 18 a l'énorme avantage pratique de ne nécessiter pour son fonctionnement que des matières premières faciles à trouver :
- du sel (chlorure de sodium) pour produire l'hypochlorite de sodium ;
- des particules de fer pour produire le coagulant ;
- et de l'électricité pour effectuer les électrolyses (et éventuellement alimenter des pompes, l'électro-aimant, des électrovannes, le compresseur d'air et le système de contrôle et de régulation) ;
- l'eau servant à la production de la solution d'hypochlorite de sodium pouvant être prélevée parmi l'eau pré-traitée par l'installation.

L'eau pré-traitée obtenue peut ensuite subir des traitements supplémentaires, en vue, notamment, d'augmenter sa pureté.

De tels procédés et installation de pré-traitement d'eau brute ont l'avantage majeur de permettre de traiter des eaux provenant de sources très variées.

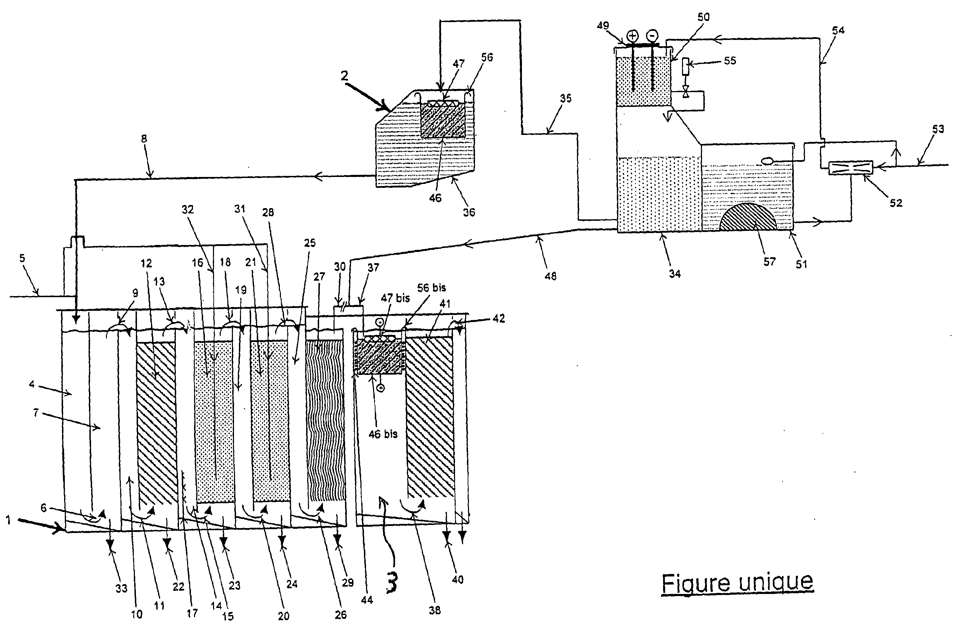

D'autres caractéristiques et avantages de l'invention vont maintenant être décrits en détail dans l'exposé qui suit et qui est donné en référence à la figure annexée qui représente schématiquement un mode de réalisation préféré d'une installation de pré-traitement d'eau brute.

### Exposé détaillé de l'invention

Sur l'unique figure annexée est représentée une l'installation de pré-traitement d'eau brute selon l'invention apte à mettre en oeuvre le procédé d'électrolyse selon l'invention. Cette installation est essentiellement composée de trois éléments principaux qui sont :
- un dispositif de filtration 1 dans lequel arrive l'eau brute,
- un premier dispositif d'électrolyse 2 servant à produire un coagulant pour le dispositif de filtration 1; et
- un deuxième dispositif d'électrolyse 3 servant à traiter l'eau provenant du dispositif de filtration, après que celle-ci a été additionnée d'une solution aqueuse d'hypochlorite de sodium.

### a) Dispositif de filtration

Le dispositif de filtration décrit sur la figure comprend un compartiment 4 faisant office de tranquillisateur pour l'eau brute. Ainsi, la vitesse du flux de l'eau brute arrivant au sommet du compartiment 4 par la conduite 5 est diminuée, ses tourbillons sont atténués.

De plus, un coagulant amené par la conduite de sortie 8 du premier dispositif d'électrolyse 2 (décrit en détail ci-dessous) est déversé dans la partie supérieure du compartiment 4 ou introduit dans la conduite 5 et s'ajoute ou se mélange à l'eau brute.

Ainsi, à l'intérieur du compartiment 4, les plus grosses particules de l'eau brute ainsi que les particules les plus fines qui coalescent ou coagulent et floculent grâce à l'action du coagulant tombent au fond du compartiment 4.

Une ouverture 6 prévue au bas d'une paroi du compartiment 4 permet à l'eau d'entrer dans un compartiment adjacent 7 jouant le rôle de coalesceur.

Un plan incliné traversant les compartiments 4 et 7 permet aux particules grosses ou coagulées provenant des compartiments 4 et 7 d'être évacués par la conduite d'évacuation 33.

Une ouverture 9 prévue près du sommet du compartiment 7 permet à l'eau de pénétrer dans un compartiment intermédiaire adjacent 10 dans la partie inférieure d'une paroi duquel est prévue une ouverture 11 constituant l'entrée d'un décanteur lamellaire 12 ayant de préférence des lamelles orientées à 40 degrés.

Des particules, essentiellement des composés du type phosphates, précipitent au fond du compartiment 10, les boues coagulées au fond du décanteur lamellaire 12, et, grâce à un plan incliné traversant le bas du compartiment 10 et du décanteur lamellaire, ces particules et boues coagulées sont évacuées par une conduite 22.

La sortie du décanteur 12 est constituée d'une ouverture 13 située au-dessus des lamelles de ce décanteur 12, au sommet d'une de ses parois. Le liquide clair surnageant s'introduit par l'ouverture 13 dans un compartiment intermédiaire adjacent 14 qui est alimenté en air par une conduite 17, afin que l'eau se sature en air et que les éléments oxydables en solution ou en suspension s'oxydent. Ainsi, par exemple, les ions ferreux résiduels présents à l'état de traces s'oxydent en ions ferriques.

Le compartiment intermédiaire 14 comporte une paroi dont la partie inférieure est pourvue d'une ouverture 15 constituant l'entrée d'un filtre biologique.

Ce filtre biologique est composé d'un premier compartiment 16 de filtration aérobie comprenant un lit de fibres hydrophobes et oléophiles en polypropylène. Ce lit de fibres est fortement aéré par l'air libre ou en solution véhiculé par l'eau arrivant du compartiment 14 et enrichie par l'air comprimé injecté au moyen de la conduite d'alimentation en air 17. En variante, on peut aussi injecter de l'oxygène ou un mélange de gaz approprié contenant de l'oxygène.

Une nitrification a ainsi lieu. Les particules tombant au fond du compartiment intermédiaire 14 ou du premier compartiment 16 sont, grâce à un plan incliné traversant le compartiment intermédiaire 14 et le compartiment 16 sont éliminées par une conduite 23.

L'eau remontant à l'intérieur du premier compartiment 16 du filtre biologique parvient à une ouverture 18 prévue au sommet d'une paroi de ce compartiment 16 en vue du passage dans un compartiment intermédiaire adjacent 19 ayant une paroi dont la partie inférieure est pourvue d'une ouverture 20 constituant l'entrée du deuxième compartiment du filtre biologique 21. L'eau remonte dans ce deuxième compartiment 21 dans lequel se trouvent un deuxième lit de fibres hydrophobes et oléophiles également en polypropylène. Cependant, à la différence du premier lit de fibres, ce deuxième lit n'est pas aéré. Il est dépourvu de conduite d'alimentation en air telle que la conduite 17 et il s'y produit donc une filtration anaérobie, qui, par dénitrification, dégrade les matières azotées et organiques contenues dans l'eau.

Les particules tombant au fond du compartiment intermédiaire adjacent 19 ou du deuxième compartiment 21 de filtration anaérobie sont, grâce à un plan incliné traversant ces compartiments, éliminées par une conduite 24.

Des moyens d'agitation mécanique (non représentés), par exemple des vérins, sont de préférence prévus pour agiter les lits de filtration et détacher la biomasse formée.

Avantageusement, chacun des compartiments de filtration biologique 16,21 est muni d'un tuyau d'alimentation 31,32. Ces tuyaux 31,32 sont reliés à la conduite d'arrivée d'eau brute 5 et ils permettent ainsi une introduction au goutte-à-goutte d'eau brute initiale. Cette faible quantité d'eau brute introduite amène des bactéries qui se fixent sur les fibres des lits de filtration. On réalise ainsi un ensemencement bactérien. En variante, on peut prévoir une ouverture ou un dispositif permettant d'introduire dans les compartiments de filtration biologique 16,21 ou dans les tuyaux 31,32, des bactéries sous la forme d'une préparation aqueuse bactérienne ou sous forme de gélules ou de poudre, avantageusement sous forme dosée.

En fonction des conditions prévalant dans le milieu, les bactéries qui colonisent chacun des deux compartiments du filtre biologique, se spécialisent. Selon les cas elles permettent la nitrification ou la dénitrification et elles décomposent les huiles et les graisses arrêtées par les fibres et nettoient ainsi ces dernières. De même, l'ammoniaque est nitrifiée puis décomposée en azote en absence d'oxygène.

Une sortie 28 prévue au sommet d'une paroi du compartiment 21 permet à l'eau chargée en biomasse d'arriver dans un compartiment intermédiaire adjacent 25 dont la partie inférieure est munie d'un ouverture 26 constituant l'entrée du séparateur 27. Ce séparateur 27 est formé de rideaux poreux en polypropylène. L'eau traverse ce séparateur 27 de bas en haut, puis, une fois arrivée en haut, est évacuée par une conduite 30 vers le deuxième dispositif d'électrolyse 3.

Les particules tombant au fond du compartiment intermédiaire 25 ou du séparateur 27, grâce à un plan incliné traversant ces derniers, sont éliminées par une conduite 29.

### b) Dispositif d'électrolyse 2

Comme indiqué ci-dessus, ce dispositif a pour fonction de produire le coagulant qui sera ensuite introduit, au moyen de la conduite de sortie 8, dans le tranquillisateur 4 puis dans le coalesceur 7 qui communique, d'un côté, avec la sortie du tranquillisateur 4 et, de l'autre côté, avec le décanteur lamellaire 12.

En temps normal, ce dispositif 2 comprend une cuve contenant :
- une solution aqueuse d'hypochlorite de sodium,
- une anode comprenant un récipient métallique, tel qu'un panier 46 contenant des billes de fer immergées dans la solution aqueuse d'hypochlorite de sodium ; et
- une cathode ayant au moins une partie immergée, généralement en forme de grille 47, dans la solution aqueuse d'hypochlorite de sodium, cette partie immergée se trouvant au-dessus des billes de fer.

La cathode 47 est de préférence disposée horizontalement au-dessus ou à l'intérieur du récipient métallique, dans sa partie supérieure.

L'hypochlorite de sodium provient généralement d'un réservoir de solution aqueuse d'hypochlorite de sodium 34 et est généralement versée au moyen d'une conduite d'entrée 35 du dispositif d'électrolyse 2 sur la cathode 47.

Une variante avantageuse consiste à alimenter directement le réservoir 34 par de l'hypochlorite de sodium produit sur place au moyen d'un dispositif complémentaire constitué d'un électrolyseur 49 plongeant dans une cuve d'électrolyse 50 remplie d'une solution de chlorure de sodium dont la concentration est comprise entre 20 et 26 g/l et est plus avantageusement d'environ 22 g/l. Cette solution saline est obtenue en mélangeant une saumure saturée par du sel 57, contenue dans une cuve 51, avec de l'eau potable adoucie arrivant par une conduite 53, à travers un hydro-injecteur 52. Par l'intermédiaire de cet hydro-injecteur 52, la saumure concentrée est aspirée et mélangée à l'eau potable adoucie pour obtenir une solution saline à 22 g/l de sel qui est déversée dans la cuve d'électrolyse 50 par la conduite 54. L'électrolyseur 49 est alimenté en courant continu jusqu'à l'obtention d'une solution d'hypochlorite de sodium à 6,5 g/l d'équivalent chlore. Lorsque le niveau de solution d'hypochlorite dans le réservoir 34 est suffisamment bas, suite à sa consommation, la vanne 55 s'ouvre pour vider la cuve d'électrolyse 50 et remplir le réservoir 34.

De plus, l'utilisation d'un tel dispositif complémentaire de production a l'avantage de fournir un solution aqueuse qui contient à la fois de l'hypochlorite de sodium à forte concentration et du chlorure de sodium. Grâce à l'augmentation de la conductivité due à la présence du chlorure de sodium, la tension d'électrolyse dans le dispositif d'électrolyse 2 peut rester faible, généralement inférieure à 10 volts.

Pour lui éviter d'être attaqué chimiquement par la solution provenant de la cuve 34, le récipient métallique ou panier contenant les billes de fer est généralement au moins partiellement en titane ou en alliage de titane, par exemple en titane/argent ayant 2 à 5% d'argent, en titane/palladium ou en titane/oxydes de métaux précieux. Il peut également être en zirconium ou en alliage de zirconium.

Le panier est généralement suspendu par des anses 56 venant s'accrocher sur deux parois de la cuve du dispositif d'électrolyse. Il a généralement une section transversale circulaire ou rectangulaire. Il peut être formé à partir d'une grille métallique ou d'une feuille métallique comportant des perforations suffisamment petites pour que les billes ne les traversent pas. Ces perforations permettent la circulation de la solution aqueuse.

A la place des billes de fer, on peut aussi utiliser de la grenaille ou des copeaux de fer.

On a constaté avec surprise qu'il n'est pas nécessaire de munir la face de la grille cathodique 47 tournée vers les billes du traditionnel élément de séparation qui est généralement un textile poreux alimentaire, qui peut être par exemple, un géotextile en toile de verre de faible épaisseur ou un textile en polyéthylène ou en polypropylène, tissé ou non tissé et qui est souvent résistant au déchirement. En effet, malgré l'absence de l'élément de séparation, il ne se produit aucun court-circuit.

La grille cathodique 47 peut être en titane, en alliage de titane, en alliage hastelloy® ou en tout autre métal ou alliage résistant à la corrosion par les ions ferriques en milieu chlorure et hypochlorite.

Etant donné que la cathode 47 est située au-dessus des particules de fer et que la conduite de sortie 8 part du fond 36 de la cuve, la circulation du produit de l'électrolyse s'effectue du haut vers le bas, ce qui a pour effet qu'il ne se produit pas de retour sensible en arrière (vers le haut) des ions ferreux et ferriques et donc pas de réduction de ces derniers. Cet effet est renforcé par le fait que l'électrolyse se fait sous courant continu.

De plus, une telle configuration a l'avantage de permettre une meilleure répartition des lignes de courant, ce qui améliore son fonctionnement. De plus, le dispositif n'a pas besoin de comporter plus d'un récipient métallique, ce qui le rend simple à réaliser.

De préférence, le fond 36 de la cuve est incliné vers la conduite de sortie 8.

Le dispositif 2 est de préférence muni de moyens d'agitation du récipient métallique (non représentés) qui peuvent être un vérin ou vibreur pneumatique ou électrique, ou un vibreur magnétique ou à ultra-sons.

### Fonctionnement du dispositif d'électrolyse 2

Bien que le dispositif d'électrolyse 2 puisse fonctionner de manière discontinue, par lots (« batch » en anglais), il est de préférence utilisé de manière continue.

Il va de soi que l'introduction des particules de fer dans le panier perforé est réalisée au départ puis des particules de fer sont rajoutées après un certain temps de fonctionnement. Typiquement, le réapprovisionnement en billes est effectué toutes les deux semaines de manière à ce que ces billes ne viennent pas à manquer dans le panier.

De même, lors de la mise en route de l'installation, il faut attendre que l'électrolyse se fasse pendant quelques minutes heures, la cuve étant dimensionnée pour que la préparation dure de 3 à 5 heures, avant d'extraire le coagulant de la cuve.

Une solution aqueuse d'hypochlorite de sodium (NaClO) est introduite dans la cuve au moyen de la conduite 35.

L'anode et la cathode sont alimentées en courant continu. L'intensité de ce courant peut être variable. Il peut aussi être sous forme d'impulsions. Sa tension est basse, généralement inférieure à 10 V, par exemple de 0,5 V à 1 V.

A l'intérieur du panier, grâce à la présence de l'hypochlorite de sodium, à température ambiante et à un pH voisin de la neutralité, il se produit une dissolution électrochimique du fer et diverses réactions, au cours desquelles l'ion ferreux (Fe²⁺) est oxydé en ion ferrique (Fe³⁺). Il semble se former du chlorure ferrique (FeCl₃, 6H₂O), ainsi qu'apparemment, en plus faible quantité, un autre composé micro-cristallin insoluble formé vraisemblablement de microcristaux d'oxy-hydroxyde de fer. On obtient ainsi dans la cuve une suspension dont on pense qu'elle contient du chlorure ferrique, des hydroxydes et de l'oxy-hydroxyde de fer.

Les moyens d'agitation sont prévus pour agiter l'anode. Il n'est pas nécessaire qu'ils agitent la cathode. En secouant l'anode, ils évitent la formation sur les billes d'un revêtement qui stopperait ou ralentirait l'électrolyse.

Le produit de l'électrolyse ou mélange réactionnel contenu dans la cuve est évacué par la conduite de sortie 8 pour servir de coagulant dans le tranquillisateur 4 suivi du coalesceur 7. Ce coagulant est destiné à provoquer la densification des matières en suspension dans l'eau à traiter, telles que les boues, et la précipitation des phosphates. Les précipités entraînent, par réaction et absorption, d'autres composés comme par exemple des métaux lourds dont le plomb et l'arsenic, mais aussi des nitrates et des composés organiques ; quant aux cyanures, ils sont immédiatement neutralisés.

De préférence, le dispositif d'électrolyse 2 est placé en hauteur, c'est-à-dire au-dessus du tranquillisateur. Ainsi, la seule pression de la hauteur de liquide dans la cuve suffit à la circulation de ce liquide. Dans le cas où ce n'est pas possible, une pompe doseuse est utilisée pour injecter le coagulant dans le tranquillisateur 4.

La quantité de coagulant injectée dans le tranquillisateur 4 est déterminée en fonction de l'eau brute à traiter. A titre d'exemple, pour 1 m³/h d'eau brute contenant de 5 à 50 mg/l de matière en suspension (MES), le débit de coagulant injecté est de 130 cm³/h à 850 cm³/h, pour une eau à 50 à 150 mg/l de MES, le débit de coagulant est de 850 à 1350 cm³/h et pour une eau à 150 à 1500 mg/l de MES, le débit de coagulant est de 1350 à 2680 cm³/h.

### c) Dispositif d'électrolyse 3

Le dispositif d'électrolyse 3 comprend des éléments similaires à ceux du dispositif d'électrolyse 2 : un panier perforé 46bis à anses 56bis, une cathode 47bis disposée de préférence horizontalement et qui peut-être une grille au-dessus de laquelle débouche une conduite 37.

Cependant, les dimensions du dispositif d'électrolyse 3 sont normalement sensiblement plus importantes, car il est destiné à traiter toute l'eau circulant à travers l'installation.

Dans ce dispositif, la concentration de la solution aqueuse en hypochlorite de sodium est moins importante que dans le dispositif d'électrolyse 2, de l'ordre de 1 à 5 mg/l (ppm) pour le dispositif 3 au lieu de, typiquement, 6500 ppm pour le dispositif 2 et la teneur totale en chlorure de sodium dans le dispositif 3 est très faible, de l'ordre de 15 à 25 mg/l.

Il s'ensuit que la conductibilité du liquide est plus faible. Par conséquent, la distance entre la cathode 47bis et le lit de billes doit être faible. Elle correspond en général à l'épaisseur de l'élément de séparation poreux, soit environ 0,7 mm. Il y a ici généralement une toile poreuse pour la séparation, la grille cathodique est recouverte de cette toile et repose ainsi sur le lit de particules de fer.

Ce dispositif est en outre muni d'un électro-aimant constitué d'une bobine de solénoïde 44 entourant le panier 46bis à anses 56bis contenant les billes. La bobine est parcourue par un courant alternatif et développe un champ magnétique dont l'induction est supérieure à 0,01 Tesla.

De préférence, l'intérieur du panier est préférablement au moins partiellement revêtu d'une couche de catalyseur, généralement du palladium.

De même, la cathode 47bis est elle aussi de préférence au moins partiellement revêtue d'une couche de catalyseur, généralement du palladium, en particulier du côté faisant face aux billes.

Les dimensions du dispositif d'électrolyse 3 sont en général différentes de celles du dispositif d'électrolyse 2, car sa fonction est totalement différente.

En effet, le dispositif d'électrolyse 3 remplit notamment les fonctions suivantes :
- il réduit l'hypochlorite en excès restant dans l'eau,
- il extrait les métaux lourds et les éléments toxiques comme l'arsenic,
- il change la nature cristallographique du carbonate de calcium contenu dans l'eau et
- il détruit les composés organo-halogénés, en particulier chlor-aminés, contenus dans l'eau.

Ainsi, il donne ou redonne à l'eau les qualités d'une eau de source.

Ce dispositif a l'avantage de permettre de traiter des eaux contenant des métaux lourds et/ou des éléments toxiques comme l'arsenic et/ou des composés organiques, des eaux à dureté calcique supérieure à 15°F (c'est-à-dire dont la concentration en carbonate de calcium est supérieure à 150 mg/l) et des eaux stagnantes provenant par exemple d'étangs mal aérés ou de réservoirs où les eaux ont séjourné trop longtemps.

### Fonctionnement du dispositif d'électrolyse 3

En se reportant à nouveau à la figure annexée, on voit que l'eau sortant par la conduite de sortie 30 du séparateur 27 du dispositif de filtration 1 est additionnée de solution d'hypochlorite de sodium provenant du réservoir 34 par la conduite 48, avant d'être introduite dans le deuxième dispositif d'électrolyse 3 par la conduite d'entrée 37 de ce dernier.

Une variante avantageuse consiste, ici aussi, à utiliser le dispositif complémentaire déjà mentionné comme source d'hypochlorite de sodium pour le réservoir 34. La première fonction de l'hypochlorite de sodium est de désinfecter l'eau arrivant par la conduite de sortie 30. Le pH de la solution d'hypochlorite de sodium produite par le dispositif complémentaire est proche de 7. Cette solution a l'avantage de contenir de l'acide hypochloreux, désinfectant plus actif que l'hypochlorite de sodium vis-à-vis des germes.

A l'intérieur de la cuve du dispositif d'électrolyse 3, on fait circuler un courant continu à travers l'anode 46bis et la cathode 47bis. Ainsi, le fer des billes s'oxyde en cation ferreux, puis en cation ferrique à l'anode.

L'ensemble correspond à la réaction globale suivante :

2 Fe²⁺ + ClO⁻ + H₂O → Cl⁻ + 2OH⁻ + 2 Fe³⁺

La présence simultanée de fer et d'ions ferreux permet au couple réducteur Fe/Fe²⁺ d'agir sur certains ions de métaux lourds. Qui plus est le chlorure ferrique oxyde certains autres ions et l'hydroxyde ferrique présent absorbe les espèces peu solubles formées aussi bien en réduction qu'en oxydation. Puis celles-ci précipitent et peuvent être éliminées par la conduite 40 prévue au fond du dispositif. Ainsi, des métaux lourds présents, n'ayant pas complètement disparu lors des étapes précédentes de coagulation et de filtration biologique, tels que le cadmium, le chrome ou le mercure, voient leurs concentrations se réduire considérablement.

Des moyens d'agitation des billes (non représentés) sont prévus. Ils produisent un frottement des billes les unes contre les autres qui retire ainsi de leurs surfaces la couche d'oxyde et les dépôts qui s'y sont formés. Cet oxyde et ces dépôts sont ensuite également éliminés par la conduite 40.

Comme moyens d'agitation, on utilise de préférence un électro-aimant, préférentiellement alimenté en courant alternatif de façon à engendrer un champ magnétique variable. L'électro-aimant a l'avantage de ne pas comporter de pièces en mouvement qui pourraient s'user et d'éviter l'utilisation de joints d'étanchéité, de contacts électriques mobiles. De plus, l'effet d'agitation pénètre à l'intérieur de la masse de billes car il n'est pas limité à une couche superficielle.

La différence de potentiel entre l'anode et la cathode est préférablement de 0,5 à 1,5 V.

De préférence, le courant continu est intermittent, c'est-à-dire haché régulièrement ou suivant un train d'impulsions, avec une fréquence allant de 0,1 à 5 Hz, de préférence de 0,5 à 1 Hz. Ceci a deux effets : pendant les périodes d'absence de courant, d'une part, les électrodes se dépolarisent et, par conséquent, les ions diffusent plus librement et, d'autre part, l'hypochlorite qui traverse la cathode n'est pas réduite par la cathode 47bis et peut donc se réduire en oxydant les ions ferreux en ions ferriques.

L'intensité du courant est fonction du débit d'eau traversant le dispositif d'électrolyse 3. Par exemple, avec un débit de 4,550 m³/h, l'intensité du courant est d'environ 14 A.

L'eau présente au fond du dispositif est introduite, par une ouverture 38 prévue au bas d'une paroi du dispositif, dans la partie inférieure d'un décanteur lamellaire adjacent 41. Les particules tombant au fond de ce décanteur sont éliminées par une conduite d'évacuation 40 et l'eau surnageant est amenée par une sortie 42 dans d'autres dispositifs pour y subir divers traitements ultérieurs connus, notamment pour augmenter davantage sa pureté.

Le revêtement en palladium du panier a pour effet de décomposer les composés organiques tels que les organo-halogénés, en particulier les organo-chlorés comme les chlor-amines, et une partie des nitrates résiduels. De surcroît, le palladium amplifie le phénomène de réduction des ions hypochlorites (ClO⁻) et de l'acide hypochloreux (HClO) par les ions ferreux.

L'électro-aimant crée en outre un champ magnétique qui modifie la structure du carbonate de calcium, les ions calcium s'orientent différemment, ce qui favorisera ultérieurement la formation de cristaux d'aragonite peu adhérente plutôt que de calcite incrustante et limitera le bouchage des pores des membranes de filtration lorsque l'eau subira ultérieurement une filtration par membrane.

De plus, le champ magnétique réorganise les atomes dans la molécule d'eau et lui redonne ainsi ses propriétés d'origine.

L'électro-aimant est alimenté par un courant alternatif, par exemple de 50 Hz.

### Fonctionnement global de l'installation selon l'invention

Les données suivantes sont fournies à titre d'exemple pour le traitement d'environ 5000 l/h d'eau brute ayant une teneur en MES allant de 5 à 1500 mg/l.

La concentration de la solution aqueuse d'hypochlorite de sodium introduite dans le premier dispositif d'électrolyse 2 est généralement de l'ordre de 6,5 g/l et son débit est généralement de 3 à 15 l/h.

Le débit du coagulant injecté en amont de la filtration biologique est généralement compris entre 0,5 et 15 l/h.

La surface du panier du premier dispositif d'électrolyse 2, qui peut avoir une section transversale circulaire ou rectangulaire, est généralement de 5 à 50 dm². Sa hauteur est généralement de 30 à 100 mm.

L'intensité du courant continu d'électrolyse du premier dispositif d'électrolyse 2 est généralement de 40 à 120 ampères.

L'eau pré-traitée obtenue sortant par la conduite 42 du deuxième dispositif d'électrolyse 3 a déjà une pureté dite « technique », c'est-à-dire qu'elle doit faire l'objet de traitements supplémentaires pour pouvoir être potable.

Dans certains cas, en fonction de la composition de l'eau brute de départ, l'eau prétraitée sortant par la sortie 42 du deuxième dispositif d'électrolyse 3 peut être potable ou n'avoir besoin que d'un traitement supplémentaire limité pour être potable.

Ces traitements ultérieurs peuvent être, par exemple, une filtration sur filtre à sable et/ou sur cartouche de micro-filtration.

Une filtration sur charbon actif peut aussi être prévue pour supprimer les odeurs, les mauvais goûts et les couleurs de l'eau ainsi que les traces d'hypochlorite résiduel. Les pesticides et des composés organiques (phénols, hydrocarbures aromatiques...) éventuellement encore présents dans l'eau sont ainsi éliminés en grande partie.

Si l'eau purifiée a un pH trop faible (inférieur à 6,5), étant donné que ni le dispositif de filtration 1, ni les dispositifs auxiliaires 2 et 3 n'ont un effet important sur le pH, il peut être prévu, en amont du coalesceur 7, par exemple dans le compartiment 4, un ajout de lait de chaux (solution aqueuse d'hydroxyde de calcium).

Si en revanche le pH de l'eau purifiée est trop fort (supérieur à 8,5), il est possible d'insérer en amont du coalesceur 7 une unité de neutralisation par de l'acide sulfurique.

On peut également prévoir une ultra-filtration pour arrêter toutes les particules dont la taille est supérieure à 0,01 µm (bactéries et virus résistant à l'hypochlorite de sodium compris), ce qui permet d'obtenir une eau bactériologiquement pure, d'extraire les grosses molécules organiques, de réduire de façon draconienne la quantité de MES résiduelle et d'obtenir une eau claire, c'est-à-dire à turbidité pratiquement nulle.

Une nano-filtration ou une osmose inverse peuvent également être envisagées, en particulier lorsque des espèces en solution ne peuvent pas être arrêtées par l'ultra-filtration.

Bien entendu, l'installation selon l'invention est munie de moyens supplémentaires bien connus de l'homme du métier, tels que des détecteurs de chlore, des sondes de pH reliées à des pH-mètres, des thermomètres ou thermocouples, des débit-mètres, des appareils de mesure de la conductivité, des pompes, des vannes électriques ou pneumatiques, des compteurs d'eau ou d'air, des moyens de réglage ou de pilotage de ces pompes, un compresseur d'air, des moyens électroniques et/ou informatiques pour contrôler et/ou commander le fonctionnement des appareils, calculer divers paramètres ou enregistrer les résultats, etc.

L'invention est définie par les revendications.

### Exemple

Cet exemple démontre l'efficacité du coagulant produit par le procédé selon l'invention.

Une eau brute provenant d'un canal est traitée dans une installation conforme à la figure annexée. Le débit d'eau brute en entrée est de 4550 l/h, sa turbidité en entrée est élevée, 65 UT/F90°.

Le coagulant produit sur place par le premier dispositif d'électrolyse 2 est injecté en, début de traitement au débit de 600 cm³/h.

On obtient les résultats suivants :

| Espèces présentes ou introduites dans l'eau brute | Quantités contenues dans l'eau en entrée (prélevée dans la conduite 5) | Quantités contenues dans l'eau après injection du coagulant et sédimentation (prélevée dans le compartiment 14) | Quantités contenues après coagulation, sédimentation et passage dans le filtre biologique (prélevée dans le compartiment 25) |
|---|---|---|---|
| - Germes aérobies mésophiles /ml | 250 | 220 | 95 |
| - Eschérichia Coli U /100 ml | 51 | 50 | 00 |
| - Entérocoques U /100 ml | 180 | 160 | 02 |
| - Arsenic µg/l | 50 | <0,01 | <0,01 |
| - Plomb µg/l | 110 | <0,01 | <0,01 |
| - Chrome µg/l | 200 | 132 | 95 |
| - Cadmium µg/l | 20 | 13 | <2 |
| - Nitrate NO₃⁻ mg/l | 60 | 29 | 3,4 |
| - Phosphate P mg/l | 3,10 | 0,45 | 0,40 |
| - Cyanure CN⁻ µg/l | 60 | <10 | <10 |

On constate d'une part, que le coagulant est très efficace sur les métaux, en particulier, l'arsenic et le plomb (cf. résultats de la 3^{ème} colonne).

D'autre part, il y a une excellente complémentarité entre l'utilisation du coagulant selon l'invention et le dispositif de filtration (cf. résultats de la 4^{ème} colonne).

On peut même déduire de ce tableau qu'il se produit un effet de synergie dû à l'utilisation combinée d'un coagulant selon l'invention et d'une filtration biologique aérobie et anaérobie.

## Revendications

1. Procédé d'électrolyse d'une solution aqueuse dans lequel :
- on introduit des particules de fer dans un récipient métallique (46) contenu dans une cuve munie d'une électrode (47) ne touchant pas ce récipient métallique (46) ;
- on introduit dans ladite cuve une solution aqueuse, de façon à ce qu'elle recouvre au moins partiellement les particules de fer et soit en contact avec l'électrode (47) ;
- on alimente en courant continu le récipient métallique (46) et l'électrode (47), le récipient métallique (46) contenant des particules de fer étant l'anode et l'électrode (47) la cathode ;
**caractérisé en ce que**
- la solution aqueuse introduite dans la cuve est une solution aqueuse d'hypochlorite de sodium dont la concentration est d'au moins 1 g/l.

2. Procédé d'électrolyse selon la revendication 1, dans lequel la concentration de la solution aqueuse en hypochlorite de sodium est supérieure à 4 g /l.

3. Procédé d'électrolyse selon la revendication 2, dans lequel la concentration de la solution aqueuse en hypochlorite de sodium est de 6,5 g /l.

4. Procédé d'électrolyse selon l'une des revendications 1 à 3, dans lequel le récipient métallique (46) est agité.

5. Procédé de pré-traitement d'une eau brute, dans lequel on effectue une électrolyse au cours de laquelle :
- on introduit des particules de fer dans un récipient métallique (46) contenu dans une cuve munie d'une électrode (47) ne touchant pas ce récipient métallique (46) ;
- on introduit dans ladite cuve une solution aqueuse, de façon à ce qu'elle recouvre au moins partiellement les particules de fer et soit en contact avec l'électrode (47) ;
- on alimente en courant continu le récipient métallique (46) et l'électrode (47), le récipient métallique (46) contenant des particules de fer étant l'anode et l'électrode (47) la cathode ;
**caractérisé en ce que** la solution aqueuse introduite dans la cuve est une solution aqueuse d'hypochlorite de sodium dont la concentration est d'au moins 1 g/l et **en ce qu'**on extrait de la cuve le produit de l'électrolyse et on l'introduit dans l'eau brute à pré-traiter.

6. Procédé de pré-traitement d'une eau brute selon la revendication 5, dans lequel l'eau brute à pré-traiter, dans laquelle le produit de l'électrolyse a été introduit, est soumise à une filtration biologique aérobie puis anaérobie.

7. Procédé de pré-traitement d'une eau brute selon la revendication 6, dans lequel :
- on ajoute une solution aqueuse d'hypochlorite de sodium dans l'eau provenant de la filtration biologique, en une quantité telle que la concentration en hypochlorite de sodium soit moins importante que dans la cuve contenant le récipient métallique (46) ; puis
- on soumet l'eau provenant de la filtration biologique aérobie puis anaérobie à une deuxième électrolyse.

8. Procédé de pré-traitement d'une eau brute selon la revendication 7, dans lequel la deuxième électrolyse est effectuée dans une deuxième cuve contenant un deuxième récipient métallique (46bis) et une deuxième électrode (47bis), la quantité de solution aqueuse d'hypochlorite ajoutée est telle que la concentration en hypochlorite de sodium de la solution aqueuse soumise à cette deuxième électrolyse est de l'ordre de 1 à 5 mg/l.

9. Procédé de pré-traitement d'une eau brute selon la revendication 7 ou 8, comprenant en outre :
- une étape de production d'une solution aqueuse d'hypochlorite de sodium qui est envoyée dans la cuve contenant le récipient métallique (46) et dans l'eau issue de la filtration biologique, en amont de la deuxième électrolyse.

10. Procédé de pré-traitement d'une eau brute selon l'une des revendications 5 à 9, dans lequel la concentration de la solution aqueuse en hypochlorite de sodium introduite dans la cuve contenant le récipient métallique (46) est supérieure à 4 g/l.

11. Procédé de pré-traitement d'une eau brute selon l'une des revendications 5 à 9, dans lequel la concentration de la solution aqueuse en hypochlorite de sodium introduite dans la cuve contenant le récipient métallique (46) est d' environ 6,5 g/l.

12. Procédé de pré-traitement d'une eau brute selon l'une des revendications 8 ou selon l'une des revendications 9 à 11, lorsque celles-ci se rattachent à la revendication 8, dans lequel la concentration de la solution aqueuse en hypochlorite de sodium utilisée dans la deuxième électrolyse est de 6,5 g/l d'équivalent chlore.

13. Procédé de pré-traitement d'une eau brute selon l'une des revendications 8 et 9 à 12, lorsque ces dernières se réfèrent directement ou indirectement à la revendication 8, dans lequel la deuxième électrolyse est effectuée avec un courant continu haché régulièrement ou suivant un train d'impulsions avec une fréquence de 0,5 à 5 Hz.

14. Procédé de pré-traitement d'une eau brute selon la revendication 13, dans lequel la deuxième électrolyse est effectuée avec un courant continu haché suivant un train d'impulsions avec une fréquence allant de 0,1 à 5 Hz.

15. Procédé de pré-traitement d'une eau brute selon l'une des revendications 8, 12 à 14 ou selon l'une des revendications 9 à 11, lorsque ces dernières se réfèrent directement ou indirectement à la revendication 8, dans lequel la première électrolyse est effectuée en utilisant un récipient métallique (46) agité et/ou la deuxième électrolyse est effectuée en utilisant des billes en fer agitées dans un deuxième récipient métallique (46bis).

16. Procédé de pré-traitement d'une eau brute selon l'une des revendications 8, 12 à 14 ou selon l'une des revendications 9 à 11, lorsque ces dernières se réfèrent directement ou indirectement à la revendication 8, dans lequel la deuxième électrolyse est effectuée en utilisant un deuxième récipient métallique (46bis) entouré par un électro-aimant, boucle magnétique ou bobine de solénoïde (44) parcourue par un courant alternatif.

## Patentansprüche

1. Elektrolyseverfahren einer wässrigen Lösung, bei der:
- Eisenpartikel in einen metallischen Behälter (46) zugeführt werden, der in einem Gefäß enthalten ist, das mit einer Elektrode (47) versehen ist, die diesen metallischen Behälter (46) nicht berührt;
- in das genannte Gefäß eine wässrige Lösung derart zugeführt wird, dass diese wenigstens teilweise die Eisenpartikel abdeckt und mit der Elektrode (47) in Kontakt ist;
- der metallische Behälter (46) und die Elektrode (47) mit Gleichstrom versorgt werden, wobei der Eisenpartikel enthaltende metallische Behälter (46) die Anode und die Elektrode (47) die Kathode ist;
**dadurch gekennzeichnet, dass**
- die in das Gefäß zugeführte wässrige Lösung eine wässrige Natriumhypochloritlösung ist, deren Konzentration wenigstens 1 g/l beträgt.

2. Elektrolyseverfahren nach Anspruch 1, bei dem die Konzentration der wässrigen Natriumhypochloritlösung höher als 4 g/l ist.

3. Elektrolyseverfahren gemäß Anspruch 2, bei dem die Konzentration der wässrigen Natriumhypochloritlösung 6,5 g/l beträgt.

4. Elektrolyseverfahren nach einem der Ansprüche 1 bis 3, bei dem der metallische Behälter (46) schnell angeregt wird.

5. Verfahren zum Vorbehandeln von Rohwasser, bei dem eine Elektrolyse durchgeführt wird, in deren Verlauf:
- Eisenpartikel in einen metallischen Behälter (46) zugeführt werden, der in einem Gefäß enthalten ist, das mit einer Elektrode (47) versehen ist, die diesen metallischen Behälter (46) nicht berührt;
- in das genannte Gefäß eine wässrige Lösung derart zugeführt wird, dass sie die Eisenpartikel wenigstens teilweise abdeckt und mit der Elektrode (47) in Kontakt ist;
- der metallische Behälter (46) und die Elektrode (47) mit Gleichstrom versorgt werden, wobei der Eisenpartikel enthaltende metallische Behälter (46) die Anode und die Elektrode (47) die Kathode ist;
**dadurch gekennzeichnet, dass** die in das Gefäß zugeführte wässrige Lösung eine wässrige Natriumhypochloritlösung ist, deren Konzentration wenigstens 1 g/l beträgt und dass aus dem Gefäß das Produkt der Elektrolyse extrahiert wird und es in das vorzubehandelnde Rohwasser zugeführt wird.

6. Verfahren zum Vorbehandeln von Rohwasser nach Anspruch 5, bei dem das zu behandelnde Rohwasser, in das das Produkt der Elektrolyse zugeführt wurde, einer aerob und dann anaerob wirkenden biologischen Filtration unterzogen wird.

7. Verfahren zum Vorbehandeln von Rohwasser nach Anspruch 6, bei dem:
- eine wässrige Natriumhypochloritlösung in das aus der biologischen Filtration stammende Wasser in einer derartigen Menge hinzugefügt wird, dass die Konzentration an Natriumhypochlorit weniger umfangreich ist als in dem den metallischen Behälter (46) enthaltenden Gefäß; dann
- wird das aus der aerob und dann anaerob wirkenden biologischen Filtration stammende Wasser einer zweiten Elektrolyse unterzogen.

8. Verfahren zum Vorbehandeln von Rohwasser nach Anspruch 7, bei dem die zweite Elektrolyse in einem einen zweiten metallischen Behälter (46bis) und eine zweite Elektrode (47bis) enthaltenden zweiten Gefäß ausgeführt wird, wobei die Menge der hinzugefügten wässrigen Hypochloritlösung derart ist, dass die Konzentration an Natriumhypochloritlösung der dieser zweiten Elektrolyse unterzogenen wässrigen Lösung in der Größenordnung von 1 bis 5 mg/l liegt.

9. Verfahren zum Vorbehandeln von Rohwasser nach Anspruch 7 oder 8, umfassend darüber hinaus:
- eine Stufe zum Herstellen einer wässrigen Natriumhypochloritlösung, die in das den metallischen Behälter (46) enthaltende Gefäß und in das aus der biologischen Filtration stammende Wasser stromauf von der zweiten Elektrolyse geschickt wird.

10. Verfahren zum Vorbehandeln von Rohwasser nach einem der Ansprüche 5 bis 9, bei dem die Konzentration der wässrigen Natriumhypochloritlösung, die in das den metallischen Behälter (46) enthaltende Gefäß zugeführt wird, größer als 4 g/l ist.

11. Verfahren zum Vorbehandeln von Rohwasser nach einem der Ansprüche 5 bis 9, bei dem die Konzentration der wässrigen Natriumhypochloritlösung, die in das den metallischen Behälter (46) enthaltende Gefäß zugeführt wird, wenigstens 6,5 g/ l beträgt.

12. Verfahren zum Vorbehandeln von Rohwasser nach Anspruch 8 oder nach einem der Ansprüche 9 bis 11, wenn diese auf Anspruch 8 rückbezogen sind, bei dem die Konzentration der in der zweiten Elektrolyse verwendete wässrige Natriumhypochloritlösung 6,5 g/l Chloräquivalent beträgt.

13. Verfahren zum Vorbehandelt von Rohwasser nach einen der Ansprüche 8 und 9 bis 12, wenn diese letzteren sich direkt oder indirekt auf Anspruch 8 beziehen, bei dem die zweite Elektrolyse mit einem regelmäßig oder gemäß einer Impulsfolge mit einer Frequenz von 0,5 bis 5 Hz zerhackten Gleichstrom ausgeführt wird.

14. Verfahren zum Vorbehandeln von Rohwasser nach Anspruch 13, bei dem die zweite Elektrolyse mit einem gemäß einer Impulsfolge mit einer von 0,1 bis 5 Hz reichenden Frequenz zerhackten Gleichstrom ausgeführt wird.

15. Verfahren zum Vorbehandeln von Rohwasser nach Anspruch 8, 12 bis 14 oder nach einem der Ansprüche 9 bis 11, wenn diese letzteren sich direkt oder indirekt auf Anspruch 8 beziehen, bei dem die erste Elektrolyse unter Verwendung eines angeregten metallischen Behälters (46) ausgeführt wird und / oder die zweite Elektrolyse unter Verwendung der in einem zweiten metallischen Behälter (46bis) angeregten Eisenkugeln ausgeführt wird.

16. Verfahren zum Vorbehandeln von Rohwasser nach einem der Ansprüche 8, 12, bis 14 oder nach einem der Ansprüche 9 bis 11, wenn diese letzteren sich direkt oder indirekt auf Anspruch 8 beziehen, bei dem die zweite Elektrolyse unter Verwendung eines zweiten metallischen Behälters (46bis) ausgeführt wird, der mit einem Elektromagneten, einer magnetischen Schleife oder Solenoidspule (44) umgeben ist, wobei die letzte mit einem Wechselstrom durchlaufen ist.

## Claims

1. A process for electrolysis of an aqueous solution wherein:
- iron particles are introduced into a metallic receptacle (46) contained in a tank equipped with an electrode (47) not touching this metallic receptacle (46);
- an aqueous solution is introduced into said tank so that it at least partially covers the iron particles and is in contact with the electrode (47);
- the metallic receptacle (46) and the electrode (47) are supplied with electrical direct current, the metallic receptacle (46) containing iron particles being the anode and the electrode (47) being the cathode;
**characterized in that**
- the aqueous solution introduced into the tank is an aqueous solution of sodium hypochlorite whose concentration is at least 1 g/l.

2. A process of electrolysis according to claim 1, wherein the sodium hypochlorite concentration of the aqueous solution is greater than 4 g/l.

3. A process of electrolysis according to claim 2, wherein the sodium hypochlorite concentration of the aqueous solution is 6.5 g/l.

4. A process of electrolysis according to one of claims 1 to 3, wherein the metallic receptacle (46) is agitated.

5. A process for pretreating raw water, wherein electrolysis is carried out during which:
- iron particles are introduced into a metallic receptacle (46) contained in a tank equipped with an electrode (47) not touching this metallic receptacle (46);
- an aqueous solution is introduced into said tank so that it at least partially covers the iron particles and is in contact with the electrode (47);
- the metallic receptacle (46) and the electrode (47) are supplied with electrical direct current, the metallic receptacle (46) containing iron particles being the anode and the electrode (47) being the cathode;
**characterized in that** the aqueous solution introduced into the tank is an aqueous solution of sodium hypochlorite whose concentration is at least 1 g/l and **in that** the product of the electrolysis is extracted from the tank and is introduced into the raw water to be pretreated.

6. A process for pretreating raw water according to claim 5, wherein the raw water to be pretreated, in which the product of the electrolysis has been introduced, is subjected to aerobic and then anaerobic biological filtration.

7. A process for pretreating raw water according to claim 6, wherein:
- an aqueous solution of sodium hypochlorite is added in the water obtained from the biological filtration in a quantity such that the sodium hypochlorite concentration is smaller than in the tank containing the metallic receptacle (46); and then
- the water from the aerobic and then anaerobic biological filtration is subjected to a second electrolysis.

8. A process for pretreating raw water according to claim 7, wherein the second electrolysis is carried out in a second tank containing a second metallic receptacle (46bis) and a second electrode (47bis), and the quantity of aqueous hypochlorite solution added is such that the sodium hypochlorite concentration of the aqueous solution subjected to this second electrolysis is approximately 1 to 5 mg/l.

9. A process for pretreating raw water according to claim 7 or 8, comprising additionally:
- a step of production of an aqueous sodium hypochlorite solution which is sent into the tank containing the metallic receptacle (46) and into the water obtained from the biological filtration, upstream from the second electrolysis.

10. A process for pretreating raw water according to one of claims 5 to 9, wherein the sodium hypochlorite concentration of the aqueous solution introduced in the tank containing the metallic receptacle (46) is greater than 4 g/l.

11. A process for pretreating raw water according to one of claims 5 to 9, wherein the sodium hypochlorite concentration of the aqueous solution introduced in the tank containing the metallic receptacle (46) is approximately 6.5 g/l.

12. A process for pretreating raw water according to claim 8 or according to one of claims 9 to 11, when these are linked to claim 8, wherein the sodium hypochlorite concentration of the aqueous solution used in the second electrolysis is 6.5 g/l of chlorine equivalent.

13. A process for pretreating raw water according to claim 8 or one of claims 9 to 12, when the latter refer directly or indirectly to claim 8, wherein the second electrolysis is carried out with a DC current which is chopped regularly or according to a pulse train with a frequency of 0.5 to 5 Hz.

14. A process for pretreating raw water according to claim 13, wherein the second electrolysis is carried out with a DC current which is chopped according to a pulse train with a frequency ranging from 0.1 to 5 Hz.

15. A process for pretreating raw water according to one of claims 8 and 12 to 14 or according to one of claims 9 to 11, when the latter refer directly or indirectly to claim 8, wherein the first electrolysis is carried out using an agitated metallic receptacle (46) and/or the second electrolysis is carried out using iron balls agitated in a second metallic receptacle (46bis).

16. A process for pretreating raw water according to one of claims 8 and 12 to 14 or according to one of claims 9 to 11, when the latter refer directly or indirectly to claim 8, wherein the second electrolysis is carried out using a second metallic receptacle (46a) surrounded by an electro-magnet, magnetic loop or solenoid coil (44) through which an AC current passes.
